## Europäisches Patentamt

(19) **European Patent Office**

**Office européen des brevets**

(11) Publication number: **0 153 057**
**B1**

(12) **EUROPEAN PATENT SPECIFICATION**

(45) Date of publication of patent specification: **23.03.88**

(51) Int. Cl.⁴: **A 21 D 8/04**

(21) Application number: **85300674.0**

(22) Date of filing: **31.01.85**

(54) **Fermentation method.**

(30) Priority: **31.01.84 AU 3390/84**

(43) Date of publication of application:
**28.08.85 Bulletin 85/35**

(45) Publication of the grant of the patent:
**23.03.88 Bulletin 88/12**

(84) Designated Contracting States:
**AT BE CH DE FR GB IT LI LU NL SE**

(56) References cited:
**DE-A-2 228 119**
**GB-A-1 316 148**
**US-A-4 180 800**

(73) Proprietor: **ARNOTT'S BISCUITS LIMITED** ·
**170 Kent Street**
**Sydney New South Wales 2000 (AU)**

(72) Inventor: **Annuk, David**
**5 Buckingham Road**
**Baulkham Hills New South Wales 2153 (AU)**
Inventor: **Voigt, Peter Leonard**
**9 Karabil Crescent**
**Baulkham Hills New South Wales 2153 (AU)**
Inventor: **Marshall, Samuel Fleming**
**50 Castle Howard Road**
**Cheltenham New South Wales 2119 (AU)**

(74) Representative: **JENSEN & SON**
**8 Fulwood Place High Holborn**
**London WC1V 6HG (GB)**

Courier Press, Leamington Spa, England.

## Description

The present invention relates to an improved fermentation method, in particular a fermentation method utilizing farinaceous or milled grain products.

Bakery type products are generally produced by either a straight dough procedure or a sponge-dough procedure. In each process, an initial flour fermentation step is required. This conditions the flour prior to formation of a dough for subsequent sheeting, and baking. The fermentation period may vary from about 2 hours to about 24 hours depending on the process and the nature of the product desired. In the sponge-dough process, the fermentation period is about 18 to 20 hours. Such a process results in inter alia, soda crackers. In this process about 60 to 70% of the total flour content is fermented prior to dough formation.

In a straight dough process, the dough is fermented for a period averaging about 4 to 6 hours. The fermentation of the milled grain, for example, wheaten flour, wholemeal flour and rye flour is utilised in the bakery industry to condition the flour prior to dough formation. A quantity of flour is slurried with water and inoculated with specific microorganisms, such as Lactobacillus plantarum and optionally Saccharomyces cerevisiae (Baker's yeast) and the slurry is fermented for a predetermined period of time in a fermentation vessel. At the present time, the fermentation step is undertaken batch-wise which means that a predetermined quantity of the ingredients is mixed, transferred to a fermentation vessel and inoculated and then allowed to stand for the fermentation period.

In a typical batch fermentation procedure for a sponge-dough using lactic acid producing bacteria, 3 phases are noted with respect to L. plantarum growth. The first 4 to 6 hours constitutes a lag phase in which there is a very gradual increase in microorganism count. The next phase is an exponential growth phase wherein a rapid multiplication of microorganisms is noted. This phase again constitutes about a 4 to 8 hour period. The last phase is a stationary phase where the growth of microorganisms is at best constant, due to substrate depletion. In the stationary phase, certain changes in the flour take place which result in changes in the flour beneficial to the rheology of the eventual dough. Hence, the stationary phase is required to properly condition the dough. The removal of the lag phase may be achieved by use of a lactic acid bacteria starter culture, thus reducing proofing time to 14—16 hours.

The batch fermentation process has several major disadvantages which have limited the baker or biscuit manufacturer for many years.

Firstly, the long fermentation period, i.e. up to 24 hours, means that a number of large fermentation vessels must always be available. Deviations from the anticipated usage may lead to wastage or limited production runs which are in themselves uneconomical, and the large floor area required for the fermentation vessels leads to uneconomical space utilisation in factories.

US Patent No. 3,547,654 describes a process for making bakery products which shortens the time of fermentation by using a concentrated bacterial culture. The bacterial concentrate is incorporated into a pre-mix and fermented for a period of time, after which it is then mixed with more flour, water, yeast and other materials and fermented for a further period. However, relatively long fermentation procedures are still required.

Also, the large batches of flour utilised are not necessarily uniform from one batch to the next.

The quality of the flour as measured by maltose value, starch damage, etc., is dependent on the grain from which the flour is derived and thus variation in climatic or geographical condition will lead to variations in this quality. Substrate variations can lead to quite major variations in the growth rate of the microorganisms and consequently the pH of the resultant ferment. This may lead to variations in the quality and the rheology of the dough and hence the final product and, unless strict quuality control procedures during fermentation and mixing are used, can lead to increases in cost and time.

Whilst continuous fermentation procedures are utilised in various industries such as the brewing industry and the dairy industry (e.g. yoghurt), continuous fermentation technology has so far not been utilised with milled grained products or baked products. Continuous fermentation procedures in other industries have always required conditions wherein the substrate is sterilized or pasteurised prior to fermentation. It would be anticipated that using a nonsterile substrate, continuous fermentation would lead to insurmountable problems resulting from undesirable microbial growth. It is well recognised that milled grain products such as wheaten flour, rye flour etc., cannot be sterilized and hence it has been considered that continuous fermentation procedures with such substrates could not be successful.

The present invention results from the unexpected finding by the present inventors that a continuous fermentation process can be utilised with milled grain substrates in nonsterile form to result in a milled grain that is useful in the production of bakery products.

In one form the present invention provides a process characterised in that a milled grain substrate in the form of an aqueous slurry is continuously fermented in the presence of lactic acid producing bacteria.

In another form the present invention provides a process for the production of a fermented, milled grain substrate useful in bakery products, said process comprising:

(i) providing a pumpable, aqueous slurry of milled grain; and

(ii) fermenting a volume of said slurry in a fermentation vessel with one or more strains of lactic acid producing bacteria under suitable conditions,

wherein fresh slurry is added to said vessel and fermented slurry is removed from said vessel substantially continuously and in such a manner that substantially steady state fermentation conditions are maintained in said vessel.

Preferably, the continuous fermentation is undertaken at steady state conditions of pH. Alternatively, the steady state condition in the fermentation vessel may be achieved by monitoring a particular component of the system such as, for example, lactic acid or maltose, and introducing fresh slurry and removing fermented slurry on the basis of the particular component.

Preferably the slurry comprises a flour/water mixture in a ratio of 1:6 to 1:14 flour to water, more preferably about 1:10.

As indicated earlier, prior art methods for the sponge-dough process, which will yield bakery products such as soda crackers, requires an 18 to 20 hour sponge fermentation. This is followed by a 4 to 6 hour proofing period. It has always been considered necessary to utilise these relatively lengthy periods in order to achieve an acceptable texture and flavour in the resulting cracker. The long sponge fermentation allows both yeast and Lactobacillus activity to take place. The doughing-up step involves further mixing of the sponge so that the remaining flour and other ingredients can be added to bring the sponge to dough like consistency. Also, the pH of the dough is adjusted from about 4—4.5 to about 7.0 with sodium bicarbonate. The final 4-6 hour proofing stage mellows the dough and allows a cohesive sheet to be formed during machining.

During the process, the unique flavour of soda crackers is developed and this has been attributed to the mixed fermentation involving both baker's yeast (Saccharomyces Cerevisiae) and lactic acid producing species of bacteriea, such as L. plantarum.

In accordance with the present invention, it has been found that the flavour contributing compounds are secondary metabolites excreted by the yeast after about the 12th hour of the sponge fermentation. These metabolites are acidic (oxo-acids), and neutral, deaminated derivatives (fusel oils/esters) of the hydrophobic amino acids, leucine, isoleucine and valine.

Not only has it always considered that a relatively long fermentation period would be required to obtain these secondary metabolites but also, it was considered that a short fermentation period would not result in the same flavour properties of the dough.

In accordance with a further form of the present invention, the inventors have found that the addition of at least one type of proteolytic enzyme to the slurry prior to fermentation with yeast and subsequent incubation of said slurry with said enzyme results in a dough in which the secondary metabolites of the yeast are similar to a 20 hour proofed soda cracker sponge.

Therefore, in accordance with a further form of the invention there is provided a process for the conditioning of a milled grain substrate for use in the production of bakery products, said process comprising:

(i) fermenting a milled grain substrate with a lactic acid producing bacteria, and

(ii) incubating said milled grain substrate in the presence of one or more types of proteolytic enzymes, under suitable conditions for enzyme activity, prior to incubation with yeast.

In one preferred form, the milled grain is fermented in the presence of both the bacteria and proteolytic enzyme at the one time. The proteolytic enzyme prferably has a pH optimum in the range of from 3.0 to 6.5, more preferably about 4.0. Preferably the proteolytic enzyme is an acid protease such as that marked by Pfizer and referred to as N7.

Notwithstanding other forms which fall within the broad scope of the present invention several embodiments will now be described by example only and with reference to the examples and accompanying drawings wherein:

Figure 1A is a schematic illustration of the prior art straight-dough process;

Figure 1B is a schematic illustration of a straight-dough process in accordance with a preferred embodiment of the present invention;

Figure 2A is a schematic illustration of a sponge-dough process in accordance with the prior art for the production of soda crackers;

Figure 2B is a schematic illustration of a sponge-dough process in accordance with a preferred embodiment of the present invention; and

Figure 3 is a schematic illustration of a feeder/mixer/fermenter combination useful in the process of a preferred embodiment of the present invention.

Turning to Figure 1A, step 1 represents ingredients being dispensed to a through in accordance with a predetermined recipe. In step 2 the trough is transferred to a mixer and in step 3 the ingredients are mixed. The dough is then transferred to a proof room in step 4 where it is proofed during step 5 for a time of between 4 to 6 hours. The dough is then transferred in step 6 to a tipper from which it is tipped in step 7 to rollers where it is processed and eventually baked.

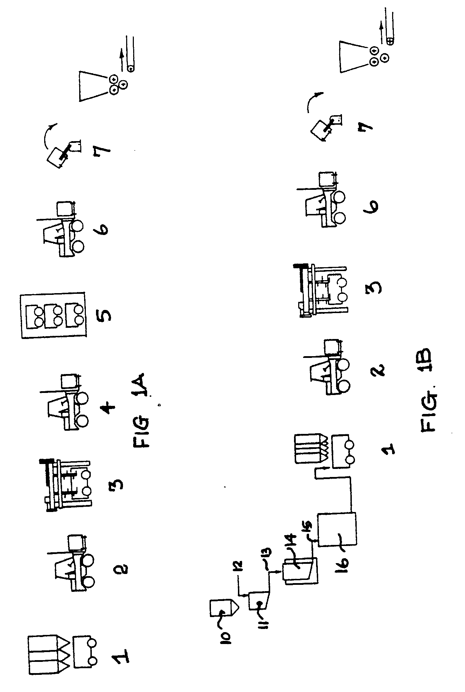

Turning to Figure 1B, prior to step 1 where ingredients for the dough are dispensed to a trough in accordance with the predetermined recipe, a portion of the dough is fermented in accordance with the process of the present invention. Flour is dispensed from hopper 10 into a slurry mixing tank 11 into which water is also added via conduit 12. The mixed slurry from mixer 11 then proceeds via conduit 13 to the fermenter 14 wherein it is continuously fermented with a lactic acid producing bacteria and yeast. The fermenter 14 is continuously fed via conduit 13 with fresh slurry whilst conduit 15 ducts fermented slurry to stroage tank 16. When required, the fermented slurry is dispensed with other ingredients to a trough in step 1. In step 2 the trough is transferred to a mixer and in step 3 the dough is mixed. Due to the preconditioning of the flour proofing is avoided and accordingly steps 4 and 5 which are the time consuming steps in the process illustrated in Figure 1A are avoided. Upon mixing the dough is transferred to a tipper in step 6 and then transferred to rollers in step 7 for subsequent processing and baking.

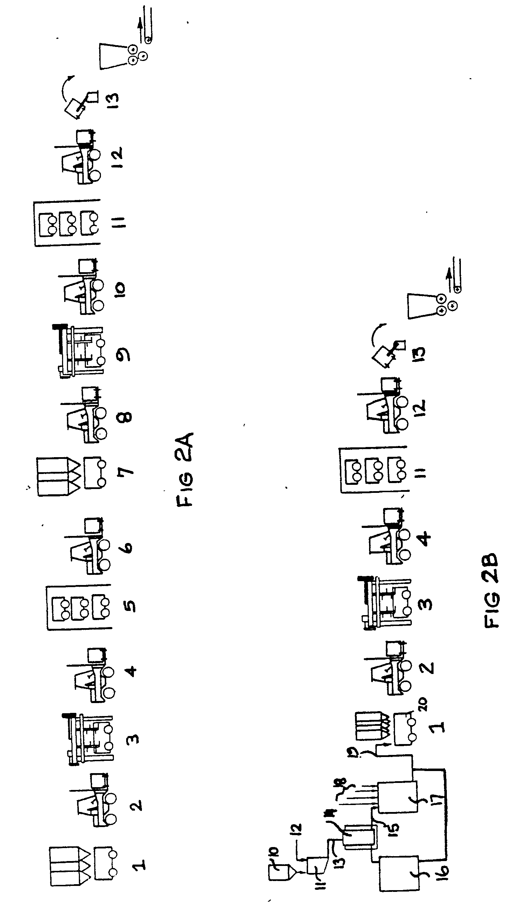

Turning to Figures 2A and 2B, in Figure 2A, ingredients for the sponge are dispensed to a trough in step 1, transferred to mixer, step 2, and the sponge-dough is mixed in step 3. After mixing the dough it is then transferred in step 4 to a proofing room and in step 5 the dough is fermented in the presence of a lactic acid producing bacteria for approximately 18 to 20 hours. After the fermentation period, the sponge is transferred to ingredient dispensers where the remaining ingredients are added to the trough which is then transferred in step 8 to a mixer 9 where the remaining ingredients are mixed with the fermented sponge and the trough is then transferred to a proof room wherein the dough is proofed in step 11 for a period of about 4 hours. The trough containing the proofed dough is then transferred to a tipper in step 12 and the dough is then tipped to rollers 13 where it is subsequently processed and baked.

In accordance with the process depicted in Figure 2B, prior to step 1, flour is dispensed from a hopper 10 to a mixer 11 into which water is also fed via conduit 12 in a predetermined relationship. An aqueous slurry of the flour is formed. The slurry is then transferred to the fermenter 14 via conduit 13 where it is fermented in the presence of a lactic acid producing bacteria. The fermented slurry is continuously removed from the fermenter 14 via conduit 15 and may be taken either to storage tank 16 or 17. Storage tank 17 is adapted for the incubation of said slurry with yeast and/or with one or more proteolytic type enzymes. Tank 17 is provided with conduits 18 for the addition of yeast slurry, dextrose, bicarbonate soda, and proteolytic enzyme. The tank is also provided with agitating means (not shown) to maintain relative homogeneity in the slurry during incubation. If desired, the fermented slurry is transferred to tank 17 and an acid protease is added and the slurry incubated with said protease for a suitable period, such as up to about 3 hours. The pH is then adjusted to between 6.5 to 7.5 and yeast added. After the appropriate incubation period, the yeast modified ferment from tank 17 or the straight ferment from tank 16 is transferred via conduit 19 to a trough 20. Other ingredients in accordance with the recipe are added to the trough and the trough transferred in step 2 to a mixer where it is mixed in step 3 to a homogeneous dough. The dough is then transferred in step 4 to a proof room where it is proofed for a period of about $1\frac{1}{2}$ to 2 hours which corresponds generally with step 11 of the prior art process depicted in Figure 2A. In step 12, the proofed dough is then transferred to a tipper and the dough is then tipped to rollers and other dough processing equipment for subsequent sheeting and baking.

In accordance with the above diagrams it can be seen that the process in accordance with the present invention substantially reduces the process steps and time required to condition and/or proof the dough prior to sheeting and baking.

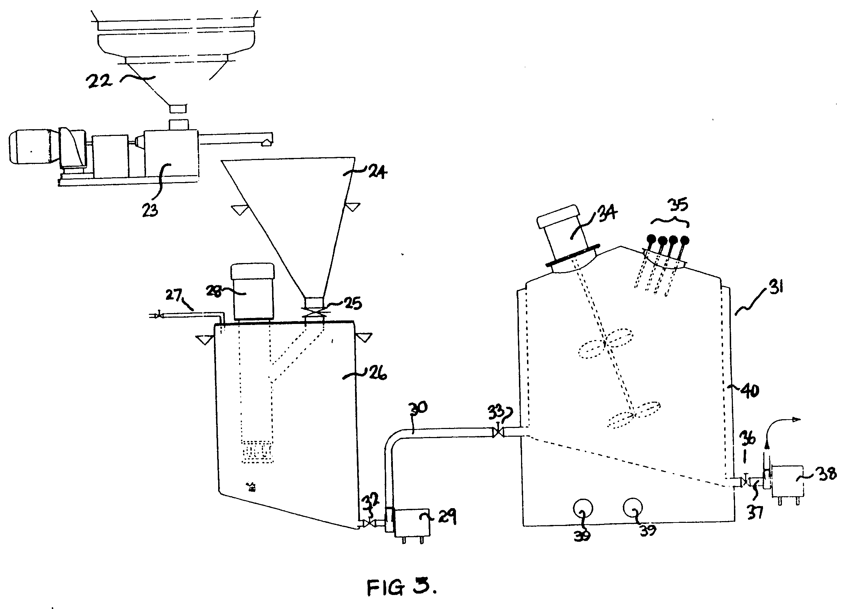

Turning to Figure 3, there is shown a feeder/mixer/fermenter apparatus in combination which apparatus is useful in accordance with the process of the present invention.

A milled grain substrate such as wheaten flour, wholemeal flour, rye flour or mixtures thereof is transferred to a hopper 22 of a two speed volumetric screw feeder 23 which delivers a predetermined quantity of flour to dump hopper 24. The flour passes from hopper 24 via dump valve 25, which is opened at predetermined intervals, into the mixing tank 26. Conduit 27 delivers metered amounts of water to tank 26 so that a slurry is formed. Preferably the ratio of flour to water is about 1:10 but ratios of 1:6 to 1:14 may be utilized. The proportions will vary with the type of farinaceous material used and in line with the requirements of the process. However, it is preferred that a generally free flowing slurry is obtained so that the slurry can be pumped and can be freely circulated in the fermentation vessel to achieve homogeneity. A mixer 28 such as a "Yetmix" mixer is providing in mixing tank 26 to mix the combination of flour and water to a homogeneous slurry.

Initially a predetermined volume of the slurry is pumped by slurry pump 29 through conduit 39 to the continuous fermenter 31. Valves 32 and 33 are provided in conduit 30 and are operated in conjunction with pump 29 by a controller as will be explained hereinafter.

Initially a predetermined volume of the slurry is fed to the fermenter 31 and an inoculum comprising lactic acid bacteria, preferably Lactobacillus plantarum and/or other Lactobacillus species is introduced into the fermenter 31.

The cell count of the inoculum is not critical to the invention but it is preferred that the inoculum provides a cell count in the fermenter 31 which generally approximates the steady state cell count of the fermentation vessel during operation. This will reduce the work-up time in the fermenter 31 upon commencement of fermentation.

Preferably, the lactic acid producing bacteria is Lactobacillus plantarum. Various strains of this bacteria are commercially available to the baker, e.g. marketed by "Microlife" under the trade name of "Sardo S.C.". Alternatively the baker may have his own strain developed or isolated.

Preferably, the temperature of the fermentation medium is maintained at a temperature conducive to the growth of the microorganism species used in the fermentation medium. In a preferred form of the invention, the temperature of the fermentation medium is maintained at about 35°C. However, the temperature of the fermentation medium will vary with the nature of the microorganisms used in the fermentation process. L. plantarum is generally active in a temperature range of about 15 to 42°C. If the fermentation is conducted in the presence of yeast, which is generally active in the temperature range of from 20 to 35°C, then the preferred temperature of fermentation will be about 33°C.

The temperature in the fermenter is maintained at a relatively constant rate by means of oil jacket 40 in which oil is circulated by oil heaters 39. Homogeneity of the slurry during fermentation in vessel 31 is maintained by agitator 34. It should be noted that agitator 34 cannot agitate the slurry too vigorously as this can cause excessive frothing.

It is an underlying notion of continuous fermentation processes that the fermentation is conducted under steady state conditions when the dilution rate i.e. the rate at which fermented slurry is removed and fresh slurry is replace equals the specific growth rate of the microorganism.

In this embodiment of the invention, the fermentation is run as a pH stat system and probes 35 are provided which monitor select conditions in the fermentation vessel such as pH, temperature and levels. The probe monitoring pH is connected to a controller (not shown) which in turn controls valves 32/33 which introduce fresh slurry into the fermenter via conduit 30 and also controls valve 36 which opens conduit 37 from which fermented slurry is pumped via ferment pump 38 to storage tanks. The influx of fresh slurry and efflux of fermented slurry is controlled by reference to the pH of the fermentation fluid. In this form of the invention the fermentation medium which is continuously stirred is monitored by means of a pH electrode 35 in the fermentation medium. Once the fermentation medium reaches a predetermined pH, such as about pH 3.9, the controller (not shown) activates valve 37 and pump 38 so that fermented slurry is removed from the fermenter. The inlet pump 29 and valves 32 and 33 are activated also so that the slurry is restored to the original volume. The volume may be monitored by means of a probe 35 which monitors the level in the fermentation tank 31. Once the original volume is achieved, pumping is then stopped and fermentation continues until again the pH of the fermentation fluid reaches a predetermined pH and again the pumps and valves are activated by the controller.

Alternatively, the pH of the system may be monitored so that the pumps may be set at predetermined time intervals and volumes in order that fresh slurry is introduced via conduit 30 and fermented slurry is removed via conduit 37 in a substantially continuous manner. In a preferred embodiment of the present invention, the steady state condition is reached at a pH of about 3.9 which corresponds to a growth rate of L. plantarum to give the steady state conditions of $3 \times 10^8$ cells/ml.

In an alternative embodiment of the invention, the steady state conditions may be monitored by means of a chemo-stat monitor, in which for example the viscosity or maltose is monitored. This system works on similar principals to the pH stat system described above.

As an example in the process of the present invention with 1:10 flour slurry dilution rates of about 50—60% per hour can be achieved. This means that the average dwell time in the fermenter is about 1.5—2 hours as compared to a 20 hour fermentation period for batch processes in the sponge-dough procedure in the biscuit industry. In a straight dough process this will reduce the rest period from 4 hours to a minimum period.

In another embodiment of the present invention, the microorganism used in the fermentation vessel may also include a yeast such as Saccharomyces cerevisiae. Preferably the yeast is immobilised in the fermenter to prevent the yeast from being washed from the fermenter as the growth rate of the yeast at about pH 3.9 is generally less than the growth rate of the L. plantarum. The yeast may be immobilised, for example, in a polymeric matrix, in alginate beads or gum carrageenan. Provision is made to prevent the immobilised yeast being washed from the vessel (e.g. screens on the outlet conduit(s)).

The process of the present invention has been found to have several advantages. The major advantage thereof is that continuity of fermentation under optimal conditions leads to greater efficiency than that obtained with batch fermentation processes. It has also been found that the high degree of control which the process allows over the fermented liquid leads to more reproducible dough rheology and a more consistent end product. It has also been noted that no significant contamination of the fermented fluid with other microorganisms results, which is surprising in light of the fact that the substrate is nonsterile. This is believed to be in part due to the low pH and high degree of an anaerobiosis, (low redox potential) as well as the high dilution rates used in the fermenter. This leads to a further application of the process in other areas apart from the bakery industry.

In many of the poorer countries in the world fermentation of a milled grain substrate is used to produce certain foods or beverages such as Ogi, Kaffir beer or Kbass. These beverages often contain high levels of undesirable microorganisms some of which produce toxic substances such as aflatoxins. The ability of the process of the present invention to ferment a nonsterile milled grain substrate without significant contamination by undesirable microorganisms makes the process applicable to the production of such beverages without significant levels of toxic substances resulting from contaminant microbial fermentation.

Moreover, the continuity of supply of the fermented flour is more adaptable to a continuous mixing process prior to proofing and baking, than batch procedures.

Although continuous mixing processes are known, they are not widely used in the bakery industry due to the batch type nature of the fermentation process. With the use of a continuous fermentation process, the fermented slurry can be fed into the mixer in regulated amounts as well as other adjuvants and in this way the advantages of the continuous mixing process are utilised.

Several preferred forms of the invention will be further illustrated in the following Examples:

### Example 1

In this Example a 1:10 mixture of flour and water was inoculated with 170 g of Lactobacillus plantarum (SARDO, Registered Trade Mark, S. C. Microlife, Florida) and premixing was continued until the fermentation vessel was filled to the operating level of 100 litres. The fermenter was programmed to harvest at pH 3.9 and the operating temperature was set at 35°C. Under these conditions of continuous growth, the doubling time of the organism was found to be 30 minutes, which on a theoretical basis, allows a steady state dilution rate of 0.6. The actual dilution rate, under prolonged pH-stat operating conditions was found to be 0.57 (i.e. 57 litres per hour). The L. plantarum numbers remain constant at $4 \times 10^8$ cells per gram of fermented flour.

### Example 2

It was discovered, unexpectedly in view of the prior art, that the replacement of water by 1:10 slurry of continuously fermented flour produced cream and savoury cracker doughs which did not require the conventional proof-time of 4—6 hours. The doughs produced by the method of the present invention could be sheeted and baked immediately after mixing, without concomitant loss in quality of the crackers. It was also noted that optimal dough development could be achieved by using the flour to water concentration range between 1:8 to 1:12 although ratios of between 1:6 to 1:14 were acceptable. The tensile energy absorption of the dough sheet and its resistance to extension, when measured by the Instron Universal Tester (Model 4301), were found to increase with flour concentrations outside the stated range.

In this Example, the following formulation was used in the preparation of cream cracker dough:

|  | Kg |
| --- | --- |
| Flour | 100.00 |
| Fat | 15.00 |
| Sugar | 0.50 |
| Salt | 1.75 |
| Fermented flour (slurry) | 30.00 |
| Soda | 0.40 |
| Yeast | 0.30 |

The temperature of the fermented flour on addition to the dough was 22 ± 3°C.

A horizontal drum mixer was used to mix the dough at 30 rpm for 300 revolutions. The temperature of the dough after mixing ranged from 26—30°C and the pH was 6.4. No proof-time was necessary and the doughs were sheeted within 30 minutes of mixing. The crackers produced by the fermentation method of the present invention were found to be uniform in taste and quality and of a quality that was at least equal to that of crackers made by the prior art processes.

### Example 3

In the Example, fermented flour with 1:10 flour to water concentration was used to produce savoury crackers.

A dough mixture of the following formulation was prepared:

|  | Kg |
| --- | --- |
| Flour | 100.00 |
| Fat | 6.50 |
| Cheddar Cheese | 25.00 |
| Salt | 1.20 |
| Fermented flour (slurry) | 36.00 |
| Soda | 0.30 |
| Yeast | 0.60 |
| Fungal Protease | 0.03 |
| Flavour | 0.60 |

The temperature of the fermented flour on addition to the doughs was 22 ± 3°C.

The doughs were mixed in a vertical spindle mixer at 25 rpm for 160 revolutions. The temperature of the doughs at mixing ranged from 26—28°C and the pH was 5.8.

No proof-time was necessary and the doughs were sheeted immediately after mixing. The savoury crackers produced by the fermentation method of the present invention were more uniform in taste and quality than the conventionally made product.

### Example 4

In the Example 0.05% (w/v) acid protease (Pfizer, N7) was added to 1000 litres of fermented flour at a pH of 3.9 contained in a bulk storage vessel. The slurry (1:10 concentration of flour to water) was digested with continuous agitation over a period of 3 hours at a temperature of 25 ± 3°C. During this period 8.2 micromoles (µM) of leucine, 18.2 µM of isoleucine, and 9.0 µM oil valine were released into the fermented slurry. After digestion, 1% (w/v) of dextrose was added and the pH of the fermented flour was adjusted to 6.5 with sodium bicarbonate. Slurried baker's yeast was also added to give a concentration of $5 \times 10^7$ cells per gram in the fermented flour. The secondary yeast fermentation was allowed to proceed over a period of 3 hours after which the concentration of oxo-acids, fusel oils and their esters, was found to be similar to a 20 hour proofed soda cracker sponge.

The method of straight dough soda cracker (Type 1) production will be further illustrated by reference to the following Example:

The dough is worked as follows:

|  | Kg |
|---|---|
| Flour | 100.00 |
| Fat | 7.50 |
| Salt | 1.30 |
| Fermented flour (acid protease digested and ex-secondary yeast fermentation) | 40.00 |
| Yeast food | 0.15 |
| Dextrose | 0.15 |
| Soda | 0.50 |
| Yeast (compressed) | 0.50 |

The soda cracker straight dough described in this Example has a final pH of 6.5.

The temperature of the fermented flour on addition to the dough was 25 ± 3°C.

The straight doughs were mixed in a vertical spindle or horizontal drum mixer at 25 and 30 rpm respectively for 200 revolutions. The temperature of the doughs after mixing ranged from 26—30°C and the pH was 6.8—7.0.

Proofing was carried out for 1.5—2 hours at a temperature of 30°C. The soda crackers using doughs produced by the method of the present invention were uniform in taste and quality and compared favourably with product made by the prior art process.

### Example 5

This Example describes the formulation of a proteolytic enzyme modified soda cracker (Type 2) dough.

|  | Kg |
|---|---|
| Flour | 100.00 |
| Fat | 12.00 |
| Salt | 1.50 |
| Fermented flour (acid protease digested and ex-secondary yeast fermentation) | 42.00 |
| Fungal Protease | 0.06 |
| Dextrose | 0.15 |
| Soda | 0.50 |
| Yeast (compressed) | 0.50 |

The temperature of the fermented flour on addition to the doughs was 25 ± 3°C.

The fungal protease used is active at the range of pH 6.5—6.8 (whereas N7 is not). This protease acts as a further modifying agent.

The straight doughs were mixed in a vertical spindle or horizontal drum mixer at 25 and 30 rpm respectively for 300 revolutions.

The temperature of the doughs after mixing ranged from 28—32°C, and the pH of the doughs at set was 6.5—6.8.

Proofing was carried out for 1.5—2 hours at a temperature of 35°C. The soda cracker produced by the method was more uniform in taste and quality than products made by the prior art process.

### Claims

1. A process for the production of a fermented, milled grain substrate useful in bakery products, said process comprising:

   (i) providing a pumpable, aqueous slurry of milled grain; and

   (ii) fermenting a volume of said slurry in a fermentation vessel with one or more strains of lactic acid producing bacteria under suitable conditions, wherein fresh slurry is added to said vessel and fermented slurry is removed from said vessel substantially continuously and in such a manner that substantially steady state fermentation conditions are maintained in said vessel.

2. The process of claim 1 wherein said slurry comprises a water and flour mixture in a ratio of 1 part flour to between 6 and 14 parts water, on a weight basis.

3. The process of claim 2 wherein the weight ratio of flour to water is about 1:10.

4. The process of any one of claims 1 to 3 wherein said lactic acid producing bacteria is a Lactobacillus species.

5. The process of claim 4 wherein said bacteria is Lactobacillus planntarum.

6. The process of any one of claims 1 to 5 wherein the fermentation is conducted in the presence of yeast.

7. The process of any one of claims 1 to 5 wherein said fermented slurry is transferred to a second fermentation vessel and incubated with one or more proteolytic enzymes, prior to fermentation by yeast.

8. The process of any one of claims 1 to 5 wherein step (ii) is conducted in the presence of one or more proteolytic enzymes.

9. The process for the production of a fermented, milled grain substrate for use in the production of bakery products, said process comprising:

(i) fermenting a milled grain substrate with a lactic acid producing bacteria; and

(ii) incubating the milled grain substrate with one or more types of proteolytic enzymes under suitable conditions for enzyme activity; and (iii) incubating the product of step (ii) with yeast.

10. The process of claim 9 wherein step (ii) is conducted concomitantly with step (i).

11. A fermented milled grain prepared in accordance with the process of any one of claims 1 to 10.

12. The use of a milled grain of claim 11 in bakery products.

## Patentansprüche

1. Verfahren zur Herstellung eines vergorenen, gemahlenen Getreidesubstrates, das für Bäckereiprodukte brauchbar ist, gekennzeichnet durch:

(i) Beistellung eines pumpfähigen flüssigen Breies von gemahlenem Getreide; und

(ii) Vergären einer Menge dieses Breies mit einer oder mehreren Arten von unter geeigneten Bedingungen Milchsäure erzeugender Bakterien, wobei im wesentlichen kontinuierlich frischer Brei in den Kessel zugegeben und vergorener Brei aus dem Kessel entnommen wird, derart, daß im Kessel im wesentlichen gleichbleibende Gärbedingungen aufrechterhalten werden.

2. Verfahren nach Anspruch 1, dadurch gekennzeichnet, daß der Brei eine Mischung aus Wasser und Mehl im Verhältnis von einem Gewichtsteil Mehl zu sechs bis vierzehn Gewichtsteilen Wasser aufweist.

3. Verfahren nach Anspruch 2, dadurch gekennzeichnet, daß das Gewichtsverhältnis von Mehl zu Wasser etwa 1:10 beträgt.

4. Verfahren nach einem der Ansprüche 1 bis 3, dadurch gekennzeichnet, daß die Milchsäure erzeugenden Bakterien der Art Lactobacillus angehören.

5. Verfahren nach Anspruch 4, dadurch gekennzeichnet, daß die Bakterien Lactobacillus plantarum sind.

6. Verfahren nach einem der Ansprüche 1 bis 5, dadurch gekennzeichnet, daß die Gärung in Anwesenheit von Hefe durchgeführt wird.

7. Verfahren nach einem der Ansprüche 1 bis 5, dadurch gekennzeichnet, daß der gegorene Brei in einen zweiten Gärkessel überführt und vor der Gärung mit Hefe mit einem oder mehreren proteolytischen Enzym(en) inkubiert wird.

8. Verfahren nach einem der Ansprüche 1 bis 5, dadurch gekennzeichnet, daß der Verfahrensschritt (ii) in Gegenwart von eimen oder mehreren proteolytischen Enzym(en) durchgeführt wird.

9. Verfahren zur Herstellung eines vergorenen, gemahlenen Getreidesubstrates für die Herstellung von Bäckereiprodukten, gekennzeichnet durch:

(i) Vergären eines gemahlenen Getreidesubstrates mit Milchsäure erzeugenden Bakterien; und

(ii) Inkubieren des gemahlenen Getreidesubstrates mit einer oder mehreren Arten von proteolytischen Enzymen bei für die Wirksamkeit der Enzyme geeigneten Bedingungen; und

(iii) Inkubieren des Produktes nach Verfahrensschritt (ii) mit Hefe.

10. Verfahren nach Anspruch 9, dadurch gekennzeichnet, daß der Verfahrensschritt (ii) gleichzeitig mit dem Verfahrensschritt (i) durchgeführt wird.

11. Vergorenes gemahlenes Getreide, dadurch gekennzeichnet, daß es gamäß dem Verfahren nach einem der Ansprüche 1 bis 10 aufbereitet ist.

12. Der Gebrauch eines gemahlenen Getreides nach Anspruch 11 in Bäckereiprodukten.

## Revendications

1. Procédé de production d'un substrat fermenté en grains moulus utile dans des produits de boulangerie, ledit procédé consistant:

(i) à fournir une bouillie aqueuse de grains moulus susceptible d'être pompée; et

(ii) à faire fermenter un certain volume de ladite bouillie dans un récipient de fermentation, avec une ou plusieurs souches de bactéries produisant de l'acide lactique dans des conditions appropriées, en ajoutant de la bouillie fraîche dans ledit récipient et en soutirant la bouillie fermentée dudit récipient sensiblement en continu et d'une façon telle qu'on maintient dans ledit récipient un régime constant de conditions de fermentation.

2. Procédé selon la revendication 1, dans lequel ladite bouillie comprend un mélange d'eau et de farine dans un rapport de 1 partie de farine pour 6 à 14 parties d'eau, en poids.

3. Procédé selon la revendication 2, dans lequel le rapport pondéral de la farine à l'eau est d'environ 1:10.

4. Procédé selon l'une quelconque des revendications 1 à 3, dans lequel la bactérie produisant ledit acide lactique est du genre Lactobacillus.

5. Procédé selon la revendication 4, dans lequel ladite bactérie est Lactobacillus plantarum.

6. Procédé selon l'une quelconque des revendications 1 à 5, dans lequel on effectue la fermentation en présence de levure.

7. Procédé selon l'une quelconque des revendications 1 à 5, dans lequel on transfère ladite bouillie fermentée dans un second récipient de fermentation et on incube avec une ou plusieurs enzymes protéolytiques avant la fermentation par la levure.

8. Procédé selon l'une quelconque des revendications 1 à 5, dans lequel on effectue le stade (ii) en présence d'une ou plusieurs enzymes protéclytiques.

9. Procédé de production d'un substrate fermenté de grains moulus pour utilisation dans la fabrication de produits de boulangerie, ledit procédé consistant:

(i) à faire fermenter un substrat de grains moulus avec une bactérie produisant de l'acide lactique;

(ii) à incuber le substrat en grains moulus avec un ou plusieurs types d'enzymes protéolytiques dans des conditions appropriées pour l'activaté enzymatique; et

(iii) à incuber le produit du stade (ii) avec de la levure.

10. Procédé selon la revendication 9, dans lequel on effectue le stade (ii) simultanément avec le stade (i).

11. Grains moulus fermentés préparés selon le procédé défini dans l'une quelconque des revendications 1 à 10.

12. Utilisation de grains moulus de la revendication 11 dans les produits de boulangerie.

FIG 1A

FIG. 1B

FIG 2A

FIG 2B

FIG 3.

0 153 057